# EUROPEAN PATENT APPLICATION

(11) **EP 2 978 231 A1**
(43) Date of publication of application: **27.01.2016**
(21) Application number: 14382287.2
(22) Date of filing: 25.07.2014
(51) Int. Cl.: H04N 21/25, H04N 21/442, H04N 21/647

(54) **Method, system and device for proactive content customization**

(71) Applicant: Telefonica Digital España, S.L.U., 28013 Madrid (ES)
(72) Inventor: Villegas Nuñez, Paulo, 28013 MADRID (ES); Andres Gutiérrez, Juan, José, 28013 MADRID (ES)
(74) Representative: Carpintero Lopez, Francisco

(57) **Abstract**

A method, system and server for providing customized multimedia services to a user by calculating the engagement level for the user based on detected events. Said events can be generated as a result of user activity in a first user device (for example a TV) or in other user devices (for example, a laptop, an smart phone). The proposed solution is adaptable, configurable and reacts on real-time to current user attitude.

## Description

### Field of the invention

The present invention has its application within the telecommunication sector and, more particularly, relates to a method, system and device for providing proactive content filtering (customization) to customers/users.

### Background of the invention

Nowadays there is a huge amount of multimedia content available and the need for recommendation, personalization and filtering or customization is continuously growing. A recommendation system provides a specific type of filter that tries to show items according to user preferences.

More and more often users are switching from traditional multimedia services to new multimedia services, replacing old multimedia by new products, connected in real-time and which provide personalized information. The decision between the use of one or the other is determined in function of the user's profile, current attitude and context. "User's context" refers to the set of environmental and user circumstances that surround user actions, which may be for example a temporal context *(when),* spatial context *(where),* content-type context *(what),* personal context *(who* and *with whom),* technological context *(which device(s)* and *how),* etc).

For example, while a user is watching TV at the same time he can be using a tablet for Internet surfing. This could be an indicator to determine the user's current engagement level or attitude towards the media and, in the long term, the user's general attitude, i.e. an stable profile. In a similar way while a user is engaged in an interactive application the TV may be running in background, and in this case the user may not care much about the content, the sound only is used as "companion" purposes. The user can also have different attitudes when using the TV device itself, e.g. from pure passive watch of a fixed channel to continuous browsing of channels, EPG checks, teletext, etc.

Multimedia devices as TV and tablets, laptops or PCs (or any other type of electronic multimedia devices) are not designed for the same purpose. For example, TV is oriented mostly towards simple watching whereas tablets (or laptops, portable computers or PCs) are designed for an interactive use. The balance between how a user uses both media systems could also determine the user's profile.

Users display different attitudes when accessing and watching media material. A classical distinction, initially set up to compare web-style browsing (tablets...) with TV-watching, is between *lean-back* and *lean-forward* attitudes. Translating to multimedia content, this distinction splits between a more *passive watching experience* (enjoying what is on offer) and *actively aiming* for specific content (or content types, or genres). These extreme positions represented for those two attitudes may be named as **Choosers** and **Seekers,** respectively:
**Choosers** have not got a concrete content piece in mind, and expect to be offered good choices of content so that they can effortlessly select what to watch.
**Seekers** have a clear idea of what they want, either in a specific, non-ambiguous form (*"this movie"*) or in an abstract form ("a *thriller with high action content"*)*,* and they are prepared to actively search for it.

In that sense, a recommendation system would cater more to chooser behaviour, while a search engine (or a sophisticated browsing interface) would work best for a seeker attitude.

Of course in practice for a specific user context there will not be a clear cut separation between chooser and seeker, and the real situation would be a mix of both attitudes, with a different degree of applicability to either option (i.e. the user will tend more towards a seeker or a chooser position, while keeping features from both). There will be a "natural" tendency for each user (their baseline attitude), which for each situation could be modified by context issues.

There are a number of solutions related to modelling the level of user engagement in multimedia services (for example online services), though they are usually more focused in highly interactive services, such as web browsing.

In terms of multimedia content consumption and management of existing devices in the personal devices ecosystem, current solutions try to determine the user's profile by measuring parameters as the frequency of use, types of content being reproduced, social activity, etc. As an example, patent application US 20030110489 by Chang et al. analyzes the click stream in a TV remote control to establish user preferences. However it does not try to model and apply the engagement level of the user, nor considers simultaneous use of TV and mobile terminal to ascertain the user's attitude towards the played media. So the system cannot provide an advanced service layer that proactively adapts the service to that engagement level.

Another approach is to measure how good is the user interaction with the devices (in terms of numbers of steps for doing an specific action) but no solution that merges the user's stable profile with the real-time activity to determine what kind of content they will enjoy has been found. There has been an abundance of proposals for the so-called "Second Screen" device, in which an interactive terminal (typically a mobile device with a touch interface, e.g. a smart phone or tablet, but also a PC) is used to interact with content related in some way with the "First Screen", that is, the TV playing multimedia content. However, those solutions have concentrated mostly on the type of interactive applications that can be run on the device (advanced EPGs, social network feeds related to the media, playback controls), and not on its capabilities for the detection of engagement levels and its application to real-time adaptation of services.

Patent Application US20130160036 monitors user activities to determine how much attention a user is paying to one of two devices (TV or companion device), and from that classify a user into a lean-back or lean-forward user. So that users engaged with the companion device are classified as lean-forward, while users dealing with the TV device are lean-back users. However said decision of classifying the user as lean-back or lean-forward is taken depending only on which device the user is concentrated in, without taking into account the engagement of users in a device-independent way (the user can be dealing with TV and mobile companion, or only with the TV, or only with a mobile device, and in any of these situations she can tend to seeker and/or chooser attitudes) and without analyzing baseline behaviour (i.e. the stable underlying profile once transient preferences are removed) or applying contextual modifications (instant attitudes) as the present invention does (in the present invention the stable and the transient profile are obtained). So the classification presented in the previous mentioned patent application is less accurate and less adapted to the user real behaviour.

Moreover, Patent Application US20130160036 uses the classification in order to modify user interfaces (e.g. lean-forward users are offered a more complex and rich interfaces) without fitting the content selection process to the user type: choosers are expected to use a ready-to-go content offering, while seekers are expected to interact with more open-ended choices, as in the present invention. Additionally, in the above referenced patent application the devices decide and select media, instead of doing the processing in backend (client devices send user actions to the backend, where profiling and classification is done and content is prepared for the user) as in the present invention. The backend processing allows for more sophisticated processing and for the capability to leverage the actions of many users to improve models and profiling.

Patent application US2013081081 specifies a system for minimizing user interactions in order to access easily to TV services. It is therefore more a user assistant than a filtering or discovery engine as the one disclosed in the present invention.

Therefore, there is a need for an optimized and more proactive solution with solves the aforementioned problems of the prior art.

### Summary of the invention

The present invention proposes a method, system, server and competent program for content customization (filtering) and service provision by detecting both the long-term profile trends and the instantaneous engagement level of each user, and using it to provide personalized navigation, discovery and user experience, adapted in real time to the user's current attitude towards media.

As explained before, users show different attitudes (engagement level) when accessing and watching media material. The user profile moves between chooser and seeker profiles, that is, between a more passive watching attitude (watching what is on the TV with little effort from the user side) and an active attitude (searching and filtering contents to watch, and dynamically switching between the available offer).

This invention uses this approach, positioning the user attitude into a point in the seeker/chooser continuous profile line (that is, it classifies the user attitude between a "pure" seeker attitude and a "pure" chooser attitude, or in other words, it positions the user attitude in a line with the "pure" seeker attitude in one extreme and the "pure" chooser attitude in the other extreme) and providing contents and specific actions depending at least on this positioning, to allow users meet their expectations when they like to enjoy a specific service. The kind of content provided is out of the scope of this invention but in general terms it can be any kind of multimedia content as movies, TV shows, songs, TV series or any other type of audio, visual or audiovisual content. The specific customized actions provided can be (not exclusive) for example: automatic TV channel creation, content recommendation, EPG (electronic program guide) navigation cues, etc or any other type of action which helps the user to enjoy a service and to make faster and easier to use a service.

In a first aspect, it is proposed a method for providing customized multimedia services to an user, the user being able to access multimedia content using at least a first user device, the first user device being communicated with a server through a communications network, the method comprising:
- the server receiving at least one event related to multimedia content accessed by the user have been triggered (said event may be for example, the result of at least one interaction of the user with the first user device);
- the server, based at least in the at least one event, calculating a current value of a user's multimedia content attitude parameter;
- the server generating based at least in the calculated value, at least one customized multimedia service;
- the server providing said customized multimedia service to the user.

In an embodiment, the method further comprises previous to step a), the following steps:
- an infrared receiver capturing an infrared communication of a infrared remote control used by the user to communicate with the first user device;
- the infrared receiver extracting a code from the infrared communication and identifying an event using said code;
- the infrared receiver sending said event to the server.

In an embodiment, the method further comprises: a first multimedia application detecting an event in said first multimedia application and/or in other multimedia applications in the first user device and the multimedia application sending said event to the server;

Said event may have been detected by the first multimedia application by: detecting at least one action performed by the user in said first multimedia application and/or in other multimedia applications in the first user device and analyzing said detected at least one action and as a result of said analysis identifying an event.

In an embodiment, the method further comprises previous to step a), the following steps:
- the first user device communicating with the server through the communications network
- a router monitoring the communication between the first user device and the server;
- the router extracting information from the communication between the first user device and the server (using for example a Deep Packet Inspection Module), analyzing said information and identifying an event from said information;
- the router sending said event to the server.

The communication between the first device and the server, may have been a result of at least one interaction of the user with the first user device (or with another user device).

The customized service can be provide directly by the server calculating the parameter o being provided through a second server in charge of providing multimedia services.

The calculated value may be stored in a database. The value of the parameter may be calculated based as well in previous values of the parameter (e.g. stored in the database) or may be calculated based as well in one or more previous events of the user previously received in the server.

The value of the parameter may be calculated based as well in one or more events which are results of interactions of the user with a second user device, different from the first user device which may be used also by the user to access multimedia content.

The value of the parameter may be calculated using a Latent Dirichlet Allocation mechanism.

In an embodiment, the calculation of the value includes the following steps:
- given a set of events of the user, analyzing the events frequency, the events type and grouping events of the user coming from the same user device;
- calculate the value using a classification algorithm which takes into account the result of the previous step;
   where the set of events include the received at least one event and one or more received events of the user which are results of interactions of the user with the first user device and/or with other user devices.

The events can be at least one of the following: channel zapping, playing a multimedia content, stopping a multimedia content, fast forwarding a multimedia content, rewinding a multimedia content, resuming a multimedia content, recording a multimedia content, scheduling a recording of a multimedia content, downloading a multimedia content, multimedia content purchase, consulting an electronic TV guide, consulting a TV channel program schedule or content information requests.

The at least one customized multimedia service provided to the user may be one of the following: the presentation to the user of a recommendation of available multimedia content or generating a multimedia channel with multimedia content customized for the user or alerting that a specific multimedia content is about to be broadcasted in a channel different to the channel that the user is currently viewing or suggesting a service in a second user device related to the multimedia content that the user is currently viewing or synchronizing multimedia content consumptions with other users.

The user devices may be one of the following: a TV, a smart TV, a laptop, a tablet, a personal computer, a portable computer, a set top box, a smart phone or a multimedia receiver.

When storing in a database the calculated parameter value, the temporal context in which said value has been calculated may be identified and associated to said calculated parameter value.

The customized service may be generated also based in previous multimedia contents accessed by the user.

In another aspect, it is proposed a server for providing customized multimedia services to an user, the user being able to access multimedia content using at least a first user device, the first user device being communicated with a server through a communications network, characterized in that the server comprises:
- a frontend manager for receiving an event related to multimedia content accessed by the user;
- a backend processor for, based at least in the event, calculating a current value of a user's multimedia content attitude parameter;
- a service layer for generating, based at least in the calculated value, at least one customized multimedia service and for providing said customized multimedia service to the user.

In another aspect, it is proposed a system for providing customized multimedia services to an user, wherein the system comprises:
- at least a first user device through which the user is able to access multimedia content, the first user device being communicated with a server through a communications network and the first user device including a multimedia application for detecting at least one event related to multimedia content accessed by the user using said first multimedia application and/or other multimedia applications in the first user device, and for sending said event to a server;
- a server which comprises:
- a frontend manager for receiving at least one event (which may be the a result of at least one interaction of the user with the first user device);
- a backend processor for, based at least in the at least one event, calculating a current value of a user's multimedia content attitude parameter;
- a service layer for generating based at least in the calculated value, at least one customized multimedia service and for providing said customized multimedia service to the user.

The system may further comprise a router for monitoring the communications between the first user device and the server through the communications network as a result of at least one interaction of the user with the first user device, for extracting information from the communications between the first user device and the server, for analyzing said information, for identifying an event from said information and for sending said event to the server.

The system may further comprise (for example, in the server) a database for storing the calculated value.

The system may further comprise an infrared receiver for capturing an infrared communication of a infrared remote control used by the user to communicate with the first user device, for extracting a code from the infrared communication, for identifying an event using said code and for sending said event to the server.

In another aspect of the present invention, a computer program is disclosed, comprising computer program code means adapted to perform the steps of the described method when said program is run on a computer, a digital signal processor, a field-programmable gate array, an application-specific integrated circuit, a micro-processor, a micro-controller, or any other form of programmable hardware. A digital data storage medium is also provided for storing a computer program which comprises instructions causing a computer executing the program to perform the above-described method.

Consequently, according to the invention, a method, system, device and computer program according to the independent claims are provided. Favourable embodiments are defined in the dependent claims.

These and other aspects of the invention will be apparent from and elucidated with reference to the embodiments described hereinafter.

The method and system in accordance with the above described aspects of the invention have a number of advantages with respect to prior art, as for example:
- Adaptability. This system fits users' expectations providing them with customized adapted services and interfaces regarding their profile, making the use of the service faster and easier and saving service resources.
- Real-time personalization: The system reacts to the current user attitude, and evolves to adapt to changes in that attitude as time passes. This personalization (customization) consists for example, of recommending contents, suggest services (TV channel creation, watch an specific movie, etc.)

The present invention leads to a real-life scenario were the users perceive the service customized up-to-date with the minimum resources spent in the back-end, where the information is generated and maintained.
- Configurability. High-configurable system in order to be capable to provide personalized services for each type of user.
- Monitoring. All user activities (actions) are recorded, increasing the accuracy of the analysis. In this case all activity can be gathered, even remote control taps using an infrared-event decoder. These activities comprise (not exclusive) usage applications (using menu, etc.), using a remote control (channel zapping, etc.), reproduction of specific content
- Synchronization: The use of modules logging activity at the network side and at the TV side enables to be able to synchronize users' activity in both ends.
- Advanced services in the user side. The system allows providing advanced personalized services such as peer-to-peer reproducing and personalized smart channels.

These and other advantages will be apparent in the light of the detailed description of the invention.

### Description of the drawings

For the purpose of aiding the understanding of the characteristics of the invention, according to a preferred practical embodiment thereof and in order to complement this description, the following figures are attached as an integral part thereof, having an illustrative and non-limiting character:
Figure 1 shows a schematic block diagram of a system (including a server) according to a embodiment of the present invention.
Figure 2 shows and schematic representation of the live user model generation.
Figure 3 shows a data flow for obtaining events according to an embodiment of the invention.
Figure 4 shows a data flow for channel creation according to an embodiment of the invention.
Figure 5 shows a data flow for synchronizing contents according to an embodiment of the invention.
Figure 6 shows a flow chart for the overall process according to an embodiment of the invention.

### Preferred embodiment of the invention

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

In the context of the invention, user activities, user actions or user interactions with a user device will be used to refer to the same concept, that is, the actions between a user and a user device that the user performs in order to interact with a user device.

Note that in this text, the term "comprises" and its derivations (such as "comprising", etc.) should not be understood in an excluding sense, that is, these terms should not be interpreted as excluding the possibility that what is described and defined may include further elements, steps, etc.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

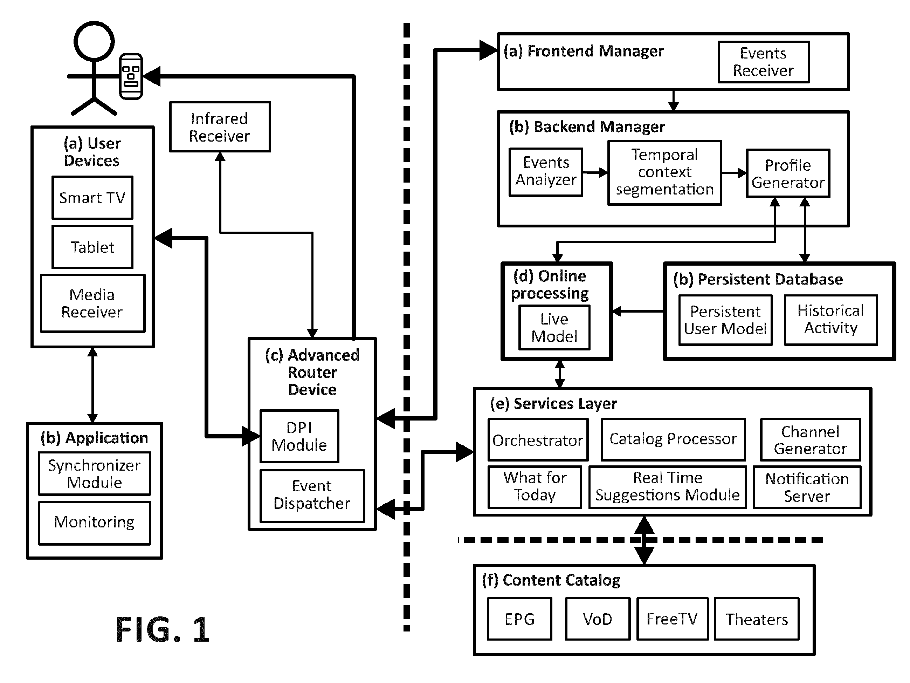

Various embodiments of the invention are now presented with reference to the FIGs. 1-6.

Figure 1 presents a block diagram of the content filtering and service provision system according to an embodiment of the present invention.

In figure 1, the different elements or functions of the systems are shown in different isolated blocks, but this is only for clarity purposes. Actually, some of the different functions shown in figure 1 can be executed in the same device (for example, the application block may be within the user devices even it is shown as a separate block).

In figure 1, some communications interfaces between the different components are shown (with arrows) but this is only for clarity purposes and it is not an exhaustive list of all communications between the different modules. For example, the Frontend Manager and the Service Layer usually can communicate (directly or through the router) with the user device (directly or through the applications block), even if it is not explicitly shown in figure 1.

### User side

At the user side, information about the current user's state and attitude is obtained and sent to the server. To that aim, the system gathers all generated information by the user's devices and this information is sent to the server side for processing purposes.

The user devices may be user electronic devices as for example a TV (e.g. a smart TV), a laptop, a tablet, a personal computer, a portable computer, set top boxes, mobile phones, smart phones, multimedia receivers or generally speaking any device which can receive multimedia content.

The purpose of the User devices block (a) is to aggregate all set of devices a user can use and specifically those that are able to generate information that could be useful for generating the user profile. All information generated by those devices is sent to the server, using a local area network, a mobile communications network or any other communications network, for example using a router a router with advanced capabilities.

Some of the user devices (for example a tablet, a laptop, a smart phone) can be used not only for generating user information but also for controlling the rest of user devices.

The purpose of the applications in the Application block (b) is to execute within the different clients of the services provided by the backend (in the user devices), processes such as content synchronizing capabilities and monitoring all activity capable of being relevant to the server. Applications may be specifically installed in the devices to provide the required functionality (gathering events, orchestrating content synchronization) for this invention, in a way such that they coordinate efficiently with the standard applications used for media download and/or consumption.

In an embodiment, some applications could be use for both purposes, providing the service (media download and/or consumption) and at the same time gathering events.

The synchronization is made (in the so called Synchronizer module) by communicating with other users and servers in order to synchronize content reproduction between different users.

The monitoring is made by gathering events and sending them to the server from an application point of view.

Gathering events is performed in the user devices using the application(s) in the application block. These applications are executed in user devices. The events can be gathered from the application(s) providing the multimedia service. In the case that, application in charge of organizing other applications in order to provide a more complex service are being used, these "organizing" applications are also used to gather the events.

The applications block is also in charge of execute the logic of services from a user point of view.

The synchronizer module is very related with the monitoring module for accomplishing these tasks. As indicated above in order to provide a complex services composed by several applications some coordination and synchronization must exist between them, either centralized or distributed. Details about how applications are coordinated is not related with the scope of this invention.

The Advanced router device block (c) is optional. The purpose of this advanced router is to filter (monitorize) all generated information at the network protocol level (that is, examine all network exchanges between user devices and outside services, and decide which are relevant for the purposes of user profiling) and then send it to the server.

The user device communicates with the server through a communication networks (a wireless communications network, a mobile communications network as 2G, 3G, 4G or LTE, LAN or W-LAN or any other type of communication networks...).

Taking into account that some information cannot be captured by the user device, what it is done in this block is to monitor the information exchanged between an user device and the server (through the communications network), analyzes said information and determines whether any of the information is relevant for generating the user profile.

In order to perform this function, this block counts with a DPI (deep packet inspection) module that analyzes the information related to user interaction passing through it (which is for example http traffic between the client and a backend media server) and determines whether it could be relevant for sending it to the analysis server. Once the information relevancy is determined it is send to the server by the so called event dispatcher module.

So the functional elements in the Advanced Router will be:
1. Deep Package Inspection (DPI) module. As explained before, it is in charge of inspecting all information packages in order to determine if they are relevant or not.
2. Event dispatcher. It is in charge of send all relevant gathered information to the server. Events to be sent comprise all relevant state changes in the user devices or service provided (media playing events, application start/end, device switch on/off, etc), including the events caused by the user actions (explicit user interactions with the user devices)

An event can be defined as any state change in the user device or in the provided service (which is usually related to multimedia content being consumed by the user) or generally speaking any information relevant for defining the multimedia user profile. All user interactions with the user device will cause a state change in the user device (that is an event) so the user interactions can be seen as triggering an event (or even as an event themselves).

But sometimes the events are not directly triggered by user actions. For example, if a multimedia content is watched until the end by the user (without stopping or discarding it), the duration of said multimedia content (the fact of having watched the multimedia content until the end) is an event (relevant for obtaining the user attitude about the multimedia content) that it is not triggered by a direct user action (it can be also said that said event is indirectly triggered by an user action which is not having stopped the content).

Infrared receiver. This device is optional. It captures all infrared information generated by the remote controls. This is information cannot be captured by the router and applications because works in a different transmission medium which is the infrared spectrum used for controlling TV, DVD recorders, etc. All this "infrared actions" are captured (detected and analyzed) and converted into specific types of events and are sent to the backend using the event dispatcher module. This infrared receiver may works as follows:
a. An infrared receiver detects infrared communications from remote controls, analyzes said communications and gathers all codes included in said communications
b. A basic processor analyses them and converts (that is, translate them, identify its meaning) into events. Due to the not existence of standardized codes, the system could, for example, match those codes to an internet code database in order to determine which meaning each code has (this is not the scope of this invention).
c. A built-in network controller connects the device to the advanced router. In an alternative embodiment, this infrared receiver is part of the Advanced Router device.
d. The event dispatcher module sends all information to the server.

The events (caused by user actions), as monitored by the Application block or captured by the infrared receiver, may be for example (without aim of being exhaustive:
- Channel zapping
- Playbacks events (play, stop, resume, fast forward, rewind, etc.)
- PVR (personal video recorder) actions such as schedule a recording of an specific program, etc.)

### Server side

At the server side, a personalized (customized) filtering suited to the current user's attitude is performed. This function may be done by the same server providing the multimedia content to the user or by another specific server.

As explained before, there are two extreme user attitudes or states when accessing and watching media material. The first one called lean back or choosers attitude (the user has not got a concrete content piece in mind, and expect to be offered good choices of content so that they can effortlessly select what to watch) and the second one called lean forward or seekers attitude (the user has a clear idea of what he wants and he is prepared to actively search for it). The proposed system positions the user disposition for content consumption into a continuum between these two extreme attitudes, a full Seeker position and a full Chooser position. This user positioning is done based on a prediction based on a pre-computed user model and a live analysis of user actions. The result is a live model for the user, which gives his current (real time) position in the Seeker/Chooser line, that is, his position between the Seeker/Chooser extreme positions (this position is called the Seeker/Chooser value or position).

Once this is achieved, the server creates the personalized offer, based on the live user model (the part of the server where this function is performed is called Services Layer (e)) and delivers it through a number of variants for user experience.

In figure 1, blocks (a) to (d) in the server would focus on generating and maintaining a model for the user's state (producing the mentioned Seeker/Chooser value), which is then used by modules (e) and (f) to act upon, producing a personalized context-dependent user experience at the home terminal.

The Frontend Manager block (a) receives and consolidates the event information (user's actions information) gathered at the user side. The result will be, for each user, a temporal sequence of events to be sent to the next block for further processing. This module is called "Frontend Manager" because it directly interacts with the users.

The Backend Manager (b) block is in charge of generating a user model from the event sequence obtained by the Frontend Manager block. In order to do that, the following steps (actions) are performed:
1. Event analysis: In this step, event frequency, event types, sequence mining analysis and source correspondence (matching events from the same user but coming from different user devices e.g. the remote control, the laptop and a mobile device) may be used to create "user features". Those are the composite outcome from a number of events in the sequence and their associated contexts. Some examples are:
   - TV channel switching patterns. E.g. an alternate switch between two channels might indicate an engaged user (maybe switching away from commercials but keeping interest on a given program), while linear scanning indicates idling around.
   - TV volume level, either as absolute value or as trend (up/down) depending on the current volume context.
   - User device (tablet, smart-phone) content browsing. Note that in households with more than one person there is an inherent ambiguity when trying to match events from a TV remote control and a personal user device routing traffic through the home router. Deciding which of the (possibly) multiple devices belongs to the same user watching TV might be resolved by finding a sequence of alternate patterns of activity between the remote control and one specific user device.
2. Temporal contexts segmentation: As user's propensity to Seeker/Chooser behavior is influenced by temporal context, further advantage can be gained by assigning the current user to a number of pre-defined suitable temporal contexts (in essence creating user micro-profiles related to a certain temporal context, as it will be explained later). Those profiles can be defined a priori or extracted from analysis of a provided dataset. For instance, a simple split could be: weekdays daytime, weekdays night time (prime time), weekends.
3. Profile generation: The set of user features (obtained in the first step) are used to produce the user model (also called user profile), positioning the user in the Seeker/Chooser (Sk/Ch) line.
   This positioning or assignment is equivalent to a classification problem, in which there are two classes (Seeker and Chooser) and there is a need to decide membership to those classes, with a degree of membership (probabilistic classification). Therefore, any kind of machine learning classifier producing confidence values could be used for the task, for example a 2-class Support Vector Machine (SVM) or logistic regression (but any type of learning classifier can be used to produce said classification). The training phase of said learning classifier could be performed with a suitably ground truth dataset (annotated via evaluation by experts or through user surveys). Alternatively, a rule-based system could also be devised. One particular embodiment of the invention uses a generative model based on Latent Dirichlet Allocation (LDA) (as disclosed for example in the document "Latent Dirichlet Allocation" by Blei et Al. Journal of Machine Learning Research 3 (2003) 993-1022) as classification mechanism to assign the current user state to its position in the Seeker-Chooser line. LDA models are also called *topic models* and they were created to evaluate the degree of membership of 'documents' to a number of 'topics', by means of the automatic extraction of models for those topics from a corpus. In the present case, there would two topics 'Seeker' and 'Chooser' and the documents would be instantiated as the set of symbols produced by the feature vectors for each of the user sessions in the training dataset. Then, for a given live user specific session, the outcome would be the degree of membership to the Seeker/Chooser topics of the feature vector for that session, which will position that session in the Seeker-Chooser line.
   If only the set of user features detected in a certain temporal context is used, an user profile for said certain temporal context is obtained. Said user profile related (and assigned) to a certain temporal context (weekdays, weekend, night, daytime...) is called user micro-profile.
   So it can be said that two different types of user profiles can be generated:
   - General Profile (also called profile type I): The profile is generated using user events regardless of the specific temporal context when they have been generated. So said profile shows an overview of the user attitude (regardless of the temporal context).
   - Micro-profiles (also called profiles type II): In this case the profile is generated using user events belonging to a certain temporal context and said profile is assigned to said certain temporal context. So each micro-profile shows the user attitude in a certain temporal context.
      In an embodiment, the general profile can be obtained as an average of all the micro-profiles generated for an user for different temporal contexts.

The **Persistent Database** (c) stores, for each user, the created user micro-profiles (user's position in the Seeker/Chooser line) for each temporal context and/or the general user profile, making them available to the rest of the system. It also keeps a raw record of all historical user feature sequences, for future additional analysis.

These stored user profiles will be used to calculate the live user profile as it will be explained later.

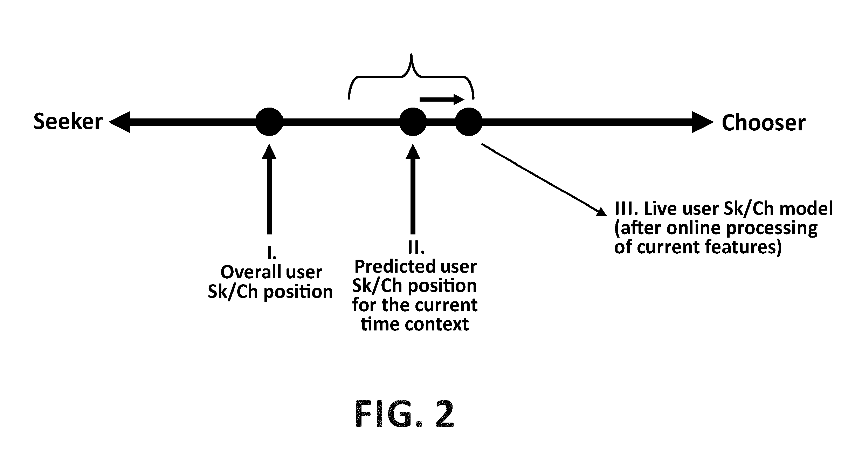

The **Online Processing** (d) system updates the user/model producing the actual model (also called live model or live user profile or user profile III) to be used to act upon to provide the personalized user experience. This updated (live) user profile may be also stored in the database. The process is summarized in Figure 2. This live user profile is obtained taking into account the user profiles stored in the persisting data base and the user events happening in real time, as it will be explained now:
It starts with the best fitting available user profile: This user profile used as starting point may be:
   - For existing users (users which already have a profile in the persistent database):
      If there is no user micro-profile for the current time context, the user profile used as starting point will be the general user profile.
      If there is at least one user micro-profile for the current time context, the user profile used as starting point will be the micro-profile which better adapts to the current time context. For example, if the current time context is Saturday morning and there is only a micro-profile for weekends, said micro-profile will be used. If there is also a micro-profile for weekends mornings, said micro-profile will be used instead of the weekends micro-profile.
   - For completely new users (users which do not have any profile stored in the persistent database), an average of all the micro-profiles of existing users for the current time context will be used. If there are micro-profiles for several time contexts which include the current time context, the time context which better adapts to the current time context may be selected and an average of all the micro-profiles of existing users for the selected time context may be used as starting point. If there is no existing users micro-profiles for the current time context, an average of all the general profiles of all the existing users will be used as starting point.

From then on, every user feature computed from new events coming from the frontend, updates the user profile in real time,. This can be implemented by using the same classifier already used for the profile generation explained in previous point 3 or also by an alternative simplified classifier, more suited to real-time online processing.

Usually, when calculating the live user profile (the user profile in real time), it is more interesting to take more into account the events currently happening than previous events, in order to have a more updated and real measurement of the current user attitude.

This can be made in several ways, for example, giving a higher weight to the currents events than to previous events when generating the profile or even in a more simple way, using the user profile obtained from previous events and moving the user position in the Seeker/Chooser line according to the current events.

The process ensures that the user model starts with a good prediction but also adapts online to the real user's attitude.

These last (current) events will be also taken into account to calculate a new user profile (as explained in previous point 3) without weighting higher the last events. This more "neutral" user profile, will be used the next time the user profile is needed. In other words, in the user persistent database is stored a user profile which is calculated using the events happened until a certain time point. When the user profile is going to be used (to provided customized services), in order to have an user profile more representative to the current user attitude, said user profile is updated with current events (generating the so called live user profile), taking more into account these last events.

In figure 1, the persistent database and the online processing are shown outside the backend manager, but this is only for clarity purposes. Actually, the persistent database and the online processing use to be part of the backend manager in order to generate the live user profile which is given to the service layer to provide customized services. Equally, the service layer (e) which provides the customized services may be also part of the backend manager.

The Services Layer (e) now uses the computed live user model to provide personalized services, which are then sent to the user side. Particular embodiments of this invention will provide a number of different personalized services; a non-exhaustive list comprises:
- Full proactivity: In time periods when the system predicts a mostly Chooser attitude, it can send a content pick to the user (*"What to watch today?")* just before the usual watching period, to provide a personalized suggestion in advance.
- Channel generator: The system is able to provide personalized channels for each user. Depending on the Seeker/Chooser degree, a channel might vary between a fully specified linear sequence (specific content items one after the other) for a mostly Chooser attitude and a completely open offer, with a browsing selection shown just after each item, for a full Seeker. In between are options in which the system offers a mostly guided experience, but with some choice offered at given points in the sequence.
- Real time suggestions module: This module is connected to the Content Catalog (f) and, through a network connection, to the application at the user side (which in turn may interact with the user handheld device, the user Smart TV/STB, or both).
   The purpose of this module is to be able to pop up content suggestions (on the TV) and related activities of interest for the user (on the mobile device) in a way such that they are synchronized with live channels (whose information is made available through the Content Catalog, which may have information from Electronic Program Guide (EPG), Video on Demand (VoD), Theaters, Free TV, TV guide...), as a result of the system's analysis of the user attitude towards content engagement. In this way, the system could pop up an alert when content of interest is about to be broadcasted in another channel and the user appears not to be actively engaged in the current broadcast. On the other hand, if the user appears to be engaged, the system might suggest a service related to the broadcast made available in the mobile device, as a "second screen" or "companion device".
- The "Orchestrator" module is responsible for coordinating the actions with the user side. This component communicates with the user applications in order to realize actions at a specific time or under specific conditions. These conditions are real-time determined by backend servers. The actions it can make are, for example, the following ones:
   o Channels management
   o Channel selection
   o Turn on /Turn off devices
   o Start a remote recording process
   o Reproduce a content
   o Start content synchronizations
   This module is in charge of executing tasks in the user side. For example automatic channel tuning when a channel in which user is interested in is broadcasted. It also coordinates the realization of complex tasks like for example content synchronizing between several users (for example, when the server indicates to the user side the reproduction of a specific content, a video on demand movie for example, at the same time provided that all users are ready to visualize it).

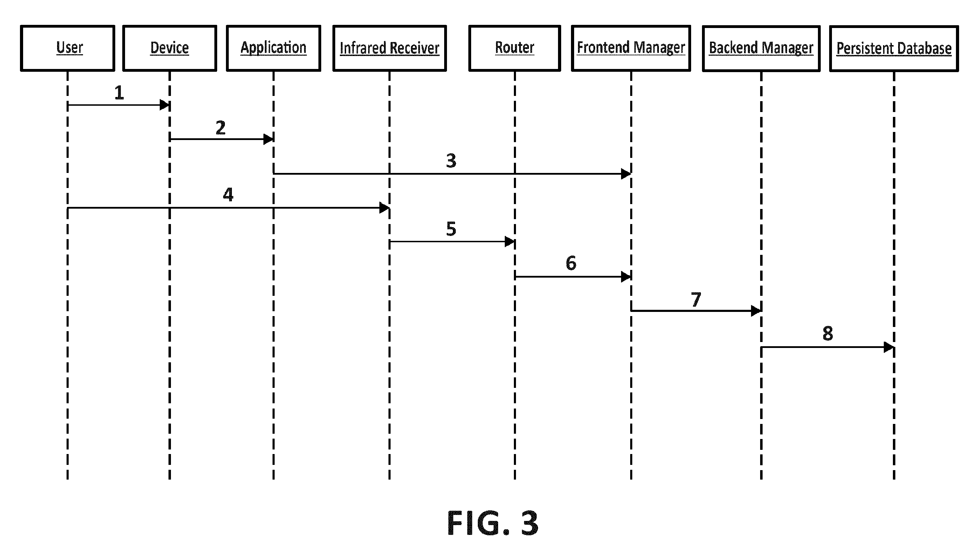

Now, several specific processes (shown in figure 3, 4 and 5) performed in the present invention will be explained.

### Obtaining events:

Figure 3 shows the operational flow of the obtaining (capturing) events mechanism. The steps to follow in order to capture events could be as follows:
1. User interacts with a device (a TV, a laptop, a tablet, a personal computer, a portable computer, a set top box, a smart phone...) either by using an application installed in the device (for example, an application which allows to access to multimedia content by downloading the multimedia content or by viewing it online in streaming) or by using a remote control.
2. 3. The events generated in the device (or devices if the user interacts with more than one device) due to the user interactions (and generally speaking all information generated by the device, which can be useful to built the user profile) are gathered by an application in the user device and sent to the server (to the frontend manager).
4. 5. In the case of the user using a remote control, all events extracted from infrared information generated by the remote control due to the user interaction is gathered by an infrared receiver and sent to the advanced router.
6. The advanced router gather user's activities information, extracted using a DPI module and transform this activity to events, which are sent to the frontend manager together with the events obtained by the infrared device.
7. All gathered information (from the application and/or from the router) is passed through the backend manager that evaluates all events. 8. As explained before, with all the gathered information a user profile is generated and stored in a persistent database for future use.

### Channel creation:

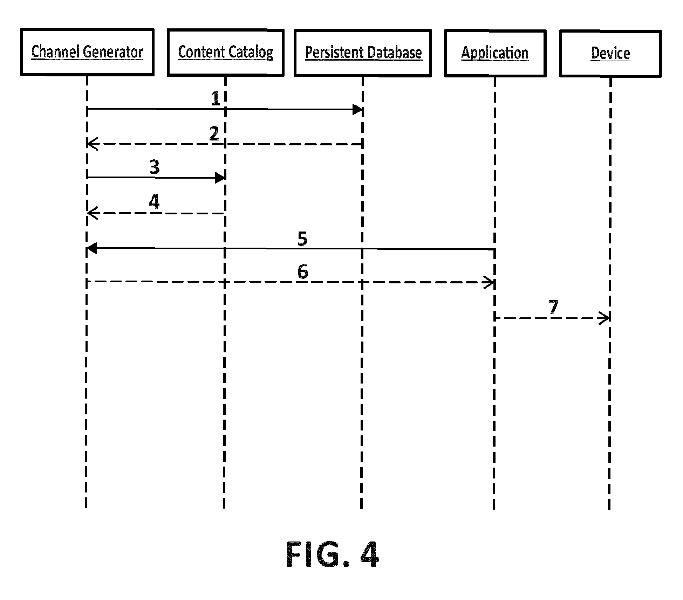

Figure 4 shows the operational flow of the channel creation mechanism. The steps to follow in order to capture events could be as follows:
1. 2. The channel generator module requests the user profile to the database and the user profile is provided to channel generator.
3. The channel generator requests content information to the content catalog.
4. Information about the content available from different sources (i.e. all available channels) is provided to the channel generator module.
5. The application layer requests the channel composition to the channel generator
6. A personalized channel with recommended content is provided to the application.
7. The device shows to the user through an user device this special channel with personalized programs and contents.

### Content synchronizing:

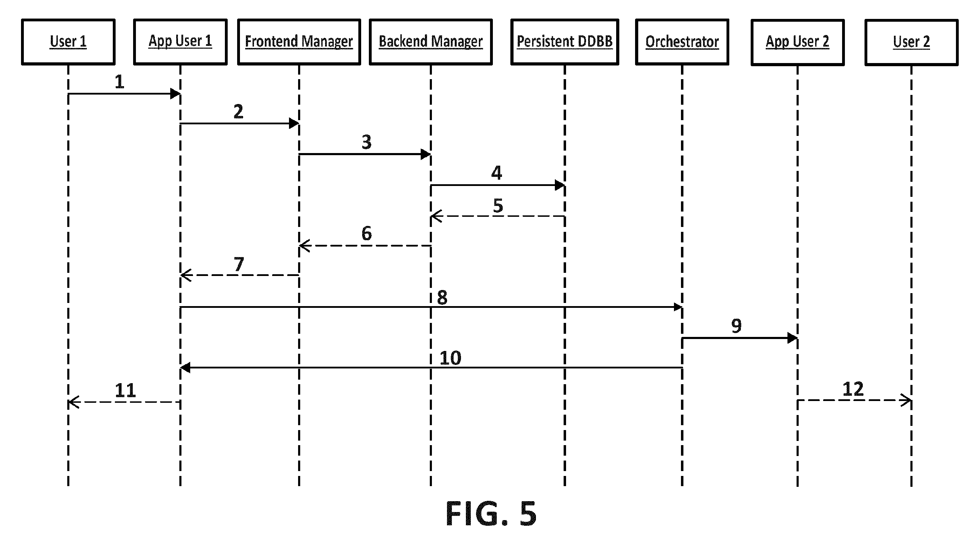

Figure 5 shows the operational flow of the content synchronization mechanism between a first user (user 1) and a second user (user 2) according to an embodiment of the invention. The steps to follow (operational flow) in order to perform said synchronization could be as follows (supposing both users want to watch the same content one of them should start the communication. In this case, it is supposed that user 1 starts the action).
1. User1 uses an application to access to multimedia content. In this exemplary case it is supposed that the same application is used for both purposes, providing the service (access to multimedia content) and at the same time gathering events and sending them to the server, but of course, two different applications could be used (one for providing the service and another one for gathering the events and sending them to the server).
2.3. As explained before, events are sent to Frontend manager using the application and, in turn, passed to the backend manager to build the user profile.
4. Backend manager obtains the user profile stored in the database and (according to the stored user profile or to a live user profile generated as explained before) generates (eg. using the Service Layer (e)) a set of actions the user can make. Depending on the user profile, a specific user could perform different actions like starting the reproduction of a multimedia content, using an advanced or a basic search form to discover contents, etc. Different users can perform a different set of actions when they interact with different services.
5. 6. 7. Data is provided to the application, for example through the Backend Manager and the Frontend Manager.
8. User1's application asks the orchestrator module for an ACK in order to start reproducing a certain content.
9. Orchestrator module sends a signal to the User 2 application for starting to reproduce the content as a specific time (typically several seconds later).
10. Orchestrator module sends a signal to the User 2 application for stating to reproduce the content as a specific time (typically several seconds later).
11. User1 starts to consume the content.
12. User2 starts to consume the content.

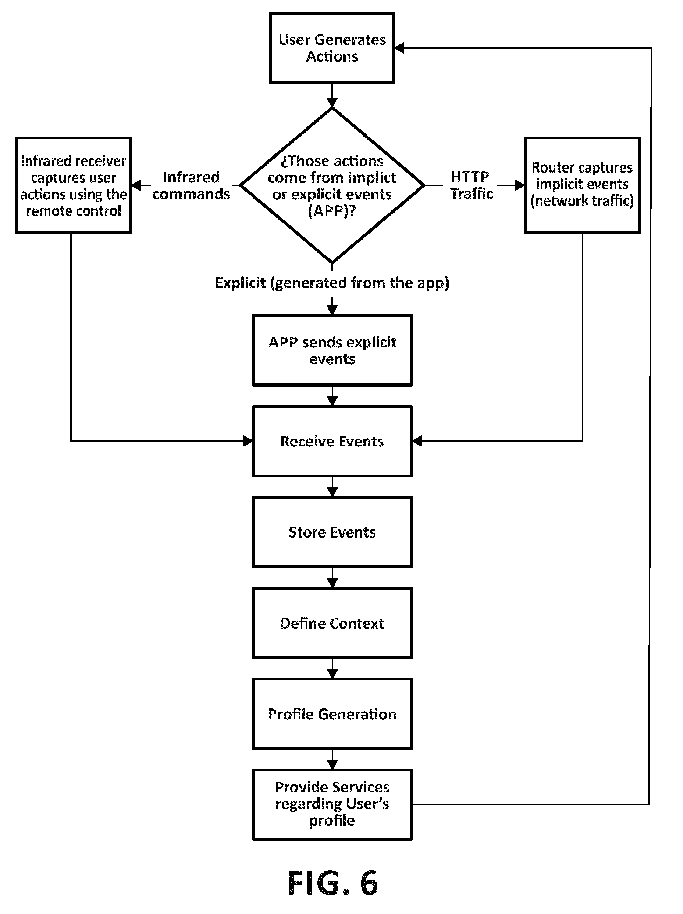

For a better understanding of the invention, now the overall process will be summarized and explained according to an embodiment of the invention. Figure 6 shows the flow chart of said overall process.

First, a user generates an action or several actions in one or several user devices. Said actions could be for example, channel zapping, consulting an electronic TV guide, consulting a TV channel program schedule, electronic playbacks events (play, stop, resume, fast forward, rewind, etc.), personal video recorder actions such as schedule a recording...and generally speaking any actions of the user related to multimedia content current or future consumption.

The relevant information about the user action sometimes is not the user action as such, but the multimedia event implied by said user action. For example, if an user press a key number 1 in a remote control, what it is interesting is not the pressing of the key but the channel zapping to channel number 1. So before sending the information to the server said captured user actions are converted into specific multimedia events (if the user action by itself is not a multimedia event). In an alternative embodiment said conversion is made at the server.

Said events may be generated using a multimedia application which captures the actions generated of this invention and send the corresponding events to the server.

Said user actions may be generated using an infrared remote, in this case, an infrared receiver captures the infrared communications generated from remote controls as a result of the user interaction and identify to which event said infrared communications correspond. And said events are sent to the server.

In case that said user actions generates information at a protocol level, a router (using a Deep Packet Inspection module), inspects all information between the user device and the media server (usually HTTP traffic) and if there is any relevant information about user content consumption, said information (events) is sent by the router to the multimedia server.

So after this step, the server receives a set of events (one or more events) generated by the user interactions with the user device(s). Said events are then stored in the server and analyzed (as previously explained, user contexts are defined and user features are generated) in order to generate the user profile.

Then, personalized multimedia services are provided to the user according to said generated user profile.

Although the present invention has been described with reference to specific embodiments, it should be understood by those skilled in the art that the foregoing and various other changes, omissions and additions in the form and detail thereof may be made therein without departing from the scope of the invention as defined by the following claims.

## Claims

1. A method for providing customized multimedia services to an user, the user being able to access multimedia content using at least a first user device, the first user device being communicated with a server through a communications network, the method comprising:
a) the server receiving at least one event related to multimedia content accessed by the user;
b) the server, based at least in the at least one event, calculating a current value of a user's multimedia content attitude parameter;
c) the server generating, based at least in the calculated value, at least one customized multimedia service;
d) the server providing said customized multimedia service to the user.

2. A method according to any of the previous claims where the method further comprises previous to step a), the following steps:
- an infrared receiver capturing an infrared communication of a infrared remote control used by the user to communicate with the first user device;
- the infrared receiver extracting a code from the infrared communication and identifying an event using said code;
- the infrared receiver sending said event to the server.

3. A method according to any of the previous claims where the method further comprises previous to step a), the following steps:
- a first multimedia application detecting at least one action performed by the user in said first multimedia application and/or in other multimedia applications in the first user device;
- the multimedia application analyzing said detected at least one action and as a result of said analysis identifying an event;
- the multimedia application sending said event to the server.

4. A method according to any of the previous claims where the method further comprises previous to step a), the following steps:
- as a result of at least one interaction of the user with the first user device, the first user device communicating with the server through the communications network
- a router monitoring the communication between the first user device and the server;
- the router extracting information from the communication between the first user device and the server, analyzing said information and identifying an event from said information;
- the router sending said event to the server.

5. A method according to any of the previous claims, where the value of the parameter is calculated based as well in previous values of the parameter stored in a database.

6. A method according to any of the previous claims, where the value of the parameter is calculated based as well in one or more previous events of the user previously received in the server.

7. A method according to any of the previous claims, where the value of the parameter is calculated based as well in one or more events which are results of interactions of the user with a second user device, different from the first user device

8. A method according to any of the previous claims where the calculation of the value includes the following steps:
- given a set of events of the user, analyzing the events frequency, the events type and grouping events of the user coming from the same user device;
- calculate the value using a classification algorithm which takes into account the result of the previous step;
where the set of events include the received at least one event and one or more received events of the user which are results of interactions of the user with the first user device and/or with other user devices.

9. A method according to any of the previous claims where the at least one event is one of the following: channel zapping, playing a multimedia content, stopping a multimedia content, fast forwarding a multimedia content, rewinding a multimedia content, resuming a multimedia content, recording a multimedia content, scheduling a recording of a multimedia content, downloading a multimedia content, multimedia content purchase, consulting an electronic TV guide, consulting a TV channel program schedule, content information requests.

10. A method according to any of the previous claims where the at least one customized multimedia service provided to the user is one of the following: the presentation to the user of a recommendation of available multimedia content or generating a multimedia channel with multimedia content customized for the user or alerting that a specific multimedia content is about to be broadcasted in a channel different to the channel that the user is currently viewing or suggesting a service in a second user device, related to the multimedia content that the user is currently viewing or synchronizing multimedia content consumptions with other users.

11. A server for providing customized multimedia services to an user, the user being able to access multimedia content using at least a first user device, the first user device being communicated with a server through a communications network, **characterized in that** the server comprises:
- a frontend manager for receiving an event related to multimedia content accessed by the user;
- a backend processor for, based at least in the event, calculating a current value of a user's multimedia content attitude parameter;
- a service layer for generating, based at least in the calculated value, at least one customized multimedia service and for providing said customized multimedia service to the user.

12. A system for providing customized multimedia services to an user, wherein the system comprises:
- at least a first user device through which the user is able to access multimedia content, the first user device being communicated with a server through a communications network and the first user device including a multimedia application for detecting at least one event related to multimedia content accessed by the user using said first multimedia application and/or other multimedia applications in the first user device, and for sending said event to a server;
- a server which comprises:
- a frontend manager for receiving at least one event related to multimedia content accessed by the user;
- a backend processor for, based at least in the at least one event, calculating a current value of a user's multimedia content attitude parameter;
- a service layer for generating based at least in the calculated value, at least one customized multimedia service and for providing said customized multimedia service to the user.

13. A system according to claim 12 further comprising a router for monitoring the communications between the first user device and the server through the communications network as a result of at least one interaction of the user with the first user device, for extracting information from the communications between the first user device and the server, for analyzing said information, for identifying an event from said information and for sending said event to the server.

14. A system according to any of the claims 12 or 13 further comprising an infrared receiver for capturing an infrared communication of a infrared remote control used by the user to communicate with the first user device, for
extracting a code from the infrared communication, for identifying an event using said code and for sending said event to the server.

15. A computer program comprising computer program code means adapted to perform the method according to any claims from 1 to 10 when said program is run on a computer, a digital signal processor, a field-programmable gate array, an application-specific integrated circuit, a micro-processor, a micro-controller, or any other form of programmable hardware.
